# EUROPÄISCHE PATENTANMELDUNG

(11) **EP 1 245 429 A2**
(43) Veröffentlichungstag der Anmeldung: **02.10.2002**
(21) Anmeldenummer: 02006445.7
(22) Anmeldetag: 22.03.2002
(51) Int. Cl.: B60K 35/00

(54) **Anzeigevorrichtung, insbesondere für ein Fortbewegungsmittel**

(30) Priorität: 27.03.2001 DE 10115050
(71) Anmelder: ROBERT BOSCH GMBH, 70442 Stuttgart (DE)
(72) Erfinder: Uhl, Heribert, 71263 Weil der Stadt (DE); Glas, Hermann, 71522 Backnang (DE)

(57) **Zusammenfassung**

Es wird eine Anzeigevorrichtung, insbesondere für Fahrzeuge vorgeschlagen, die einen flachen Bildschirm (2) sowie Positionierungsmittel (4, 12) umfasst, mit welchen der flache Bildschirm (2) in eine gewünschte Betrachtungsposition bewegbar ist. Der Erfindung liegt die Aufgabe zugrunde, eine derartige Anzeigevorrichtung vergleichsweise vielfältiger einsetzen zu können. Dies wird einerseits dadurch gelöst, dass der flache Bildschirm (2) aus flexiblem Material besteht und die Positionierungsmittel (4, 13) den flachen Bildschirm (2) bei einer Bewegung in die Betrachtungsposition gekrümmt transportieren. Andererseits wird die Aufgabe gelöst, indem ebenfalls ein flexibler Bildschirm eingesetzt wird und die Positionierungsmittel zusätzlich oder alternativ Stabilisierurigsmittel aufweisen, durch welche der flache Bildschirm (2) in einer freistehenden Betrachtungsposition eine vorgegebene Form einnimmt, ohne dass die Flexibilität des Bildschirms (2) wesentlich eingeschränkt ist.

## Beschreibung

Die Erfindung betrifft eine Anzeigevorrichtung, insbesondere für ein Fortbewegungsmittel, nach dem Oberbegriff des Anspruchs 1.

### Stand der Technik

Anzeigevorrichtungen der einleitend bezeichneten Art sind in unterschiedlichen Ausführungsformen bekannt geworden. Beispielsweise werden vielfach im Dachhimmel des Fluggastbereichs von Flugzeugen ausklappbare flache Bildschirme eingesetzt, auf welchen die Flugzeuggäste im ausgeklappten Zustand des Bildschirms beispielsweise Spielfilme oder die Route des Flugzeugs auf einer Karte verfolgen können.

Bei einer anderen Ausführungsform wird ein aus dem Cockpit in vertikaler Richtung ausfahrbarer flacher Bildschirm, insbesondere zur Anzeige von Informationen zu einem Navigationssystem genutzt.

Zum Ausklappen des flachen Bildschirms (z.B. eines TFT-Bildschirms) ist eine vergleichsweise aufwändige mechanische Kinematik erforderlich.

Ein aus einem Armaturenbrett ausfahrbarer flacher Bildschirm ist zudem dahingehend problematisch, als dass er im ausgefahrenen Zustand einen abstehenden harten Gegenstand bildet, der im "Crashfall" das Verletzungsrisiko für Fahrzeuginsassen erhöht.

### Aufgabe und Vorteile der Erfindung

Der Erfindung liegt die Aufgabe zugrunde, eine Anzeigevorrichtung der einleitend bezeichneten Art bereitzustellen, die sich vergleichsweise vielfältiger einsetzen lässt.

Diese Aufgabe wird durch die Merkmale des Anspruchs 1 sowie des Anspruchs 2 gelöst. In den Unteransprüchen sind vorteilhafte und zweckmäßige Weiterbildungen der Erfindung angegeben.

Die Erfindung geht von einer Anzeigevorrichtung, insbesondere für ein Fortbewegungsmittel, z.B. ein Fahrzeug oder ein Flugzeug aus, die einen flachen Bildschirm sowie Positionierungsmittel umfasst, mit welchen der flache Bildschirm in eine gewünschte Betrachtungsposition bringbar ist. Bei einem ersten wesentlichen Aspekt der Erfindung wird ein flacher Bildschirm eingesetzt, der aus flexiblem Material besteht, wobei die Positionierungsmittel den flachen Bildschirm bei einer Bewegung in die Betrachtungsposition gekrümmt transportieren. D.h. der flache Bildschirm wird in sich gebogen. Durch diese Vorgehensweise wird es möglich, das notwendige Bauraumvolumen für das Unterbringen und Bewegen des flachen Bildschirms im Vergleich zu bekannten Lösungen wesentlich flexibler anordnen zu können. Denn der freizuhaltende Bereich an einer Montageoberfläche muss weder in der Größenordnung des Displays liegen, noch ist es erforderlich, unterhalb der Montageoberfläche in Ausfahrrichtung des Bildschirms eine Bautiefe bereitzuhalten, die der Höhe des Bildschirms in dieser Richtung entspricht, da der flache Bildschirm durch seine Flexibilität ohne größeren mechanischen Aufwand unterschiedlich gekrümmte Lagen einnehmen kann.

Bei einem weiteren wesentlichen Aspekt der Erfindung wird ein flacher Bildschirm aus flexiblem Material in Kombination mit Stabilisierungsmitteln vorgeschlagen, durch welche der flache Bildschirm in einer frei stehenden Betrachtungsposition gezielt eine vorgegebene Form einnimmt, ohne dass die Flexibilität des Bildschirms wesentlich eingeschränkt ist. Durch diese Maßnahme ist es im Hinblick auf eine Verletzungsgefahr unproblematisch, wenn der flache Bildschirm senkrecht aus einer Armaturenoberfläche ausfährt und dann frei im Raum steht. Denn aufgrund der nach wie vor gegebenen Flexibilität der Bildschirmanordnung wird diese im Crashfall bei einem ungewollten Zusammentreffen mit einem Fahrzeuginsassen durch eine kleine Kraftaufwendung flexibel wegklappen, was das Risiko, sich daran zu verletzen, deutlich herabsetzt.

Prinzipiell hat der Einsatz eines flexiblen Materials für den flachen Bildschirm darüber hinaus für beide erfindungsgemäße Lösungen den Vorteil, dass für eine Bewegung des flachen Bildschirms vergleichsweise kleinere Motoren und Getriebe eingesetzt werden können, da das Gewicht eines solchen Bildschirms im Vergleich zu einem herkömmlichen flachen Bildschirm geringer ist. Außerdem ist die Variation von Bildschirmgrößen leicht möglich, indem das Display aus einer Abdeckung nur teilweise ausfährt.

In einer weiteren besonders bevorzugten Ausgestaltung der Erfindung ist es günstig, wenn die Stabilisierungsmittel auf Zug gehaltene Glieder aufweisen, die erst bei überschreiten einer gewöhnlich auftretenden Belastung eine vorgegebene Position verlassen, in welche die Glieder nach Wegfall der außergewöhnlichen Belastung wieder zurückkehren. Beispielsweise sind auf der Rückseite des Displays, z.B. an den Rändern positionierte elastisch auf Druck gehaltene Formglieder möglich, die ähnlich wie bei einem allgemein bekannten Kinderspielzeug, bei welchem eine Figur nach Wegfall einer Zugspannung auf in Figurenelementen geführte Schnur in sich zusammenfällt und beim Spannen der Schnur die einzelnen Figurenelemente sich wieder in der Figurenform anordnen, eine in Abhängigkeit von der geometrischen Form eindeutige Lage einnehmen. Dabei sollten elastische Mittel dafür Sorge tragen, dass nach einem Auslenken der Glieder aus der vorgegebenen Position diese nach Wegfall der Auslenkursache wieder in die Ursprungsposition automatisch zurückfinden. Z.B. ordnen sich die Glieder in der Ursprungsposition linienförmig bzw. stabförmig an.

Im Weiteren ist es besonders vorteilhaft, wenn die Positionierungsmittel Umlenkorgane umfassen, durch welche der flexible Bildschirm derart gekrümmt werden kann, dass er durch lediglich eine Schiebebewegung aus einer ersten Ebene in eine zweite Ebene bringbar ist, die in einem Winkel zur ersten Ebene steht. Bei einer solchen Ausgestaltung der Positionierungsmittel wird die Eigenschaft des flexiblen Bildschirms genutzt, dass dieser, insbesondere auch mehrfach bei entsprechender Führung gekrümmt werden kann und sich sozusagen seinen Weg sucht. Beispielsweise kann das Display innerhalb eines Armaturenbretts ungefähr horizontal ausgerichtet sein, wobei durch Umlenkorgane der vordere Rand des Displays bereits in eine ungefähr vertikale Position gebogen wird, so dass das Display ungefähr senkrecht zur "Parkebene" aus der Oberfläche des Armaturenbretts z.B. nur aus einem Schlitz ausfährt.

Der Schlitz ist vorzugsweise verschließbar, so dass in der Parkposition des Displays der verdeckte Schlitz am Armaturenbrett von außen kaum ins Auge fällt. Auf diese Weise lässt sich insbesondere das "Cockpit" in Kraftfahrzeugen übersichtlich und optisch ansprechend gestalten.

Die Führung eines flexiblen flachen Bildschirms auf einer in sich gekrümmten Bahn kann durch unterschiedliche Maßnahmen erfolgen.

Beispielsweise können die Umlenkorgane einen in Verschieberichtung ausgerichteten Führungskanal aufweisen, der entsprechend gekrümmt ist und in dem sich der Bildschirm verschieben lässt.

Ebenso ist es möglich, gegebenenfalls auch zusätzlich, dass die Umlenkorgane wenigstens eine in Verschieberichtung ausgerichtete Führungsschiene umfassen, in welcher ein Rand des Bildschirms verschiebbar aufgenommen ist. Vorzugsweise werden auf den beiden seitlich gegenüberliegenden Rändern des Bildschirms solche Führungsschiene angebracht, um eine gleichmäßige Biegung des Bildschirms beim Verfahren zu gewährleisten.

Schließlich ist es bevorzugt, wenn der Bildschirm über einen Drehantrieb verschiebbar ist, der auf eine flächige Seite des Bildschirms wirkt. Dies kann beispielsweise durch eine gummierte Walze oder ein Zahnrad erfolgen, das in am Bildschirm angeordnete Stabilisierungsmittel eingreift.

### Zeichnungen:

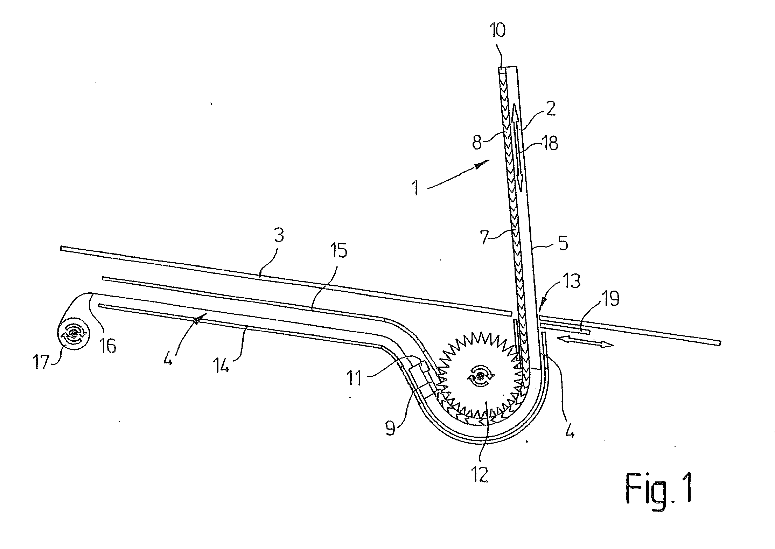

Eine Ausführungsform der Erfindung ist in den Zeichnungen dargestellt und unter Angabe weiterer Vorteile und Einzelheiten näher erläutert. Es zeigen
- Figur 1: eine unter einer Abdeckung eingebaute Anzeigevorrichtung mit flexiblem Bildschirm in einer teilweise geschnittenen schematischen Seitenansicht,

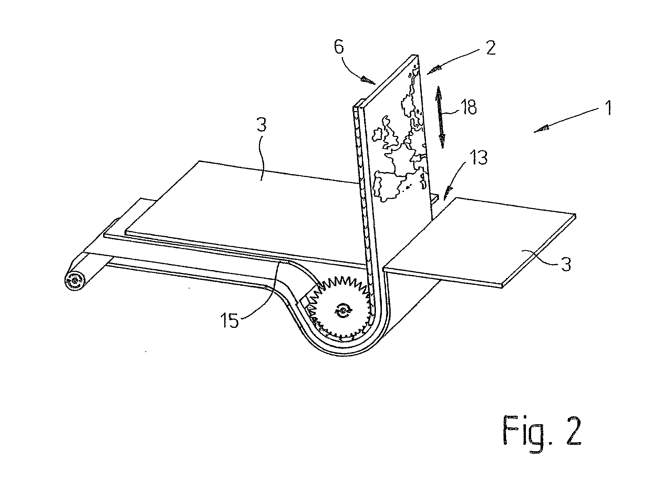

- Figur 2: die Ausführungsform gemäß Figur 1 ausschnittsweise und perspektivisch dargestellt und
- Figur 3: die Ausführungsform gemäß Figur 1 im Armaturenbrett eines Kraftfahrzeugs angeordnet in einer schematischen, teilweise geschnittenen Seitenansicht.

### Beschreibung des Ausführungsbeispiels

In den Figuren ist eine Anzeigevorrichtung 1 dargestellt, die einen flexiblen flachen Bildschirm 2, im Folgenden mit flexiblem Display bezeichnet, umfasst, das unter einer Abdeckung 3 in einem gekrümmten Kanal 4 geführt ist. An der der Sichtseite 5 gegenüberliegenden Rückseite 6 des Displays 2 ist eine Tragstruktur in Form eines flexiblen Gerüsts 7 angebracht, durch welche das Display 2 nach dem Verlassen des Kanals 4 eine eindeutig vorgegebene Position, hier ebene Position, einnimmt. Dazu besteht das flexible Gerüst beispielhaft aus geeignet geformten Spannstrukturelementen 8. Eine Aneinanderreihung einer Vielzahl von Spannstrukturelementen 8 wird durch ein elastisches Spannelement 9 und einem Kraftübertragungsmittel (nicht dargestellt), das zwischen einer Verankerungsstelle 10 und dem Spannelement 9 auf Zug gehalten wird, gegeneinander gedrückt. Das Spannelement 9 stützt sich dabei an einer weiteren Verankerungsstelle 11 ab. Das nicht dargestellte Zugelement ist vorzugsweise in den Spannstrukturelementen 8 geführt. Die Spannstrukturelemente 8 sind vorteilhafterweise so ausgeführt, dass sie im aneinander gedrückten Zustand ohne eine außergewöhnliche Belastung von außen das Display außerhalb der Abdeckung 3 in einer Ebene in einem vorgegebenen Winkel zur Abdeckung 3 ausrichten.

Sollte eine außergewöhnliche Belastung auf das Display 2 von außen auftreten, verlassen die Spannstrukturelemente 8 ihre "eingerastete" Position und reagieren nahezu gleich flexibel wie das flexible Display 2. Das heißt, sollte man unbeabsichtigt dagegen stoßen, klappt das Display 2 einfach weg.

Die Flexibilität des Gerüsts 7 wird bei der Unterbringung des Displays 2 unter der Abdeckung 3 genutzt, indem die Anordnung aus Display 2 mit flexiblem Gerüst 7 in dem aus z.B. zwei flächigen Blechelementen 14, 15 gebildeten Kanal 4 entlang eines Antriebszahnrad 12, das in das flexible Gerüst 7 zum Transport des Displays eingreift, eine z. B. ungefähr 170° Krümmung ausführt. Das Display 2 lässt sich am Ende des Kanals 4 in einer Ebene "parken", die z. B. ungefähr 90° zur Betrachtungsebene des Displays 2 im ausgefahrenen Zustand liegt. Das vordere Ende des Displays 2 bleibt jedoch im vorliegenden Ausführungsbeispiel leicht gekrümmt, um vom Antriebszahnrad 12 für ein Ausfahren des Displays 2 aus einem Schlitz 13 erfasst werden zu können. Im "Parkzustand" wird das Display 2 durch die Blechelemente 14 und 15 geschützt, die den Kanal 4 definieren. Ansteuerzuleitungen können als flexibles Band 16 realisiert werden, welches sich im "Parkzustand" des Displays 2 auf einer selbst aufrollenden Spule 17 befindet.

Durch eine einfache Drehbewegung des Antriebszahnrades 12 kann somit das Display 2 ein- und ausgefahren werden (siehe jeweils Pfeil 18 in den Figuren).

Im eingefahrenen Zustand lässt sich der Schlitz 13 durch eine verschiebbare Schlitzabdeckung 19 verschließen.

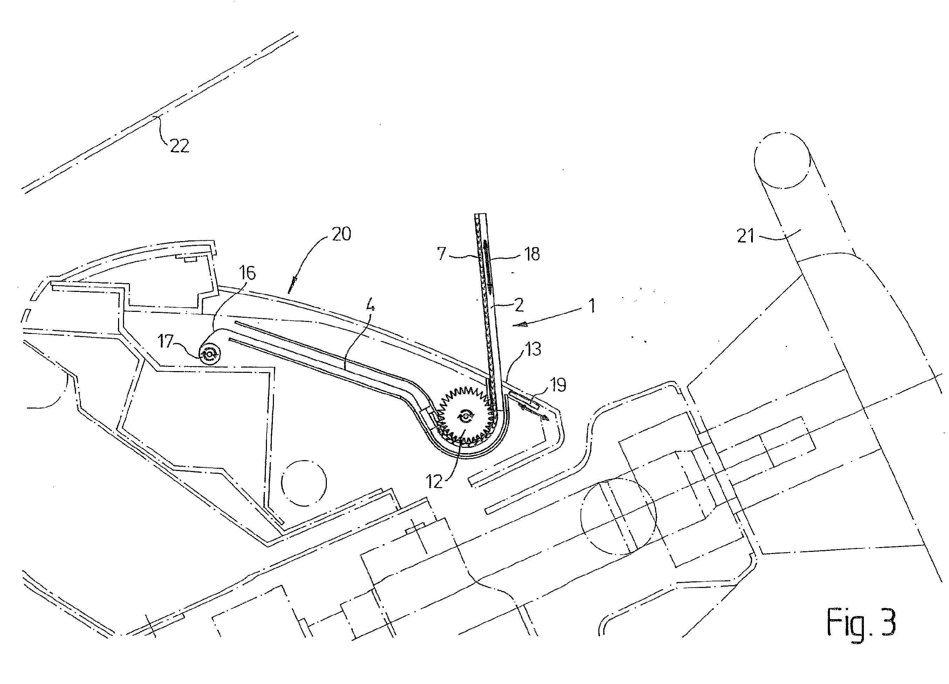

In Figur 3 ist die Anzeigevorrichtung 1 eingebaut in ein Armaturenbrett 20 dargestellt. Die Anzeigevorrichtung 1 befindet sich beispielhaft hinter einem Lenkrad 21 vor einer Windschutzscheibe 22.

Für den Fall, dass das Display 2 nicht benötigt wird, lässt es sich einfahren und beeinträchtigt somit die Aufmerksamkeit des Fahrzeuglenkers in keinster Weise. Im ausgefahrenen Zustand bildet das abstehende Display 2 im "Crashfall" aufgrund seiner Flexibilität keine Quelle für Verletzungen. Durch die Biegsamkeit des Displays lässt es sich platzsparend innerhalb des Armaturenbretts 2 unterbringen, obgleich im geparkten Zustand von außen nur der schmale durch eine Schlitzabdeckung 19 abgedeckte Schlitz 13 sichtbar ist.

## Patentansprüche

1. Anzeigevorrichtung (1), insbesondere für Fortbewegungsmittel, die einen flachen Bildschirm (2) sowie Positionierungsmittel (4, 7, 8, 9, 10, 11, 12, 14, 15) umfasst, mit welchen der flache Bildschirm (2) in eine gewünschte Betrachtungsposition bringbar ist, **dadurch gekennzeichnet, dass** der flache Bildschirm (2) aus flexiblem Material besteht und die Positionierungsmittel (4, 7, 8, 9, 10, 11, 12, 14, 15) den flachen Bildschirm (2) bei einer Bewegung in die Betrachtungsposition gekrümmt transportieren.

2. Anzeigevorrichtung nach dem Oberbegriff des Anspruchs 1, insbesondere nach Anspruch 1, **dadurch gekennzeichnet, dass** der flache Bildschirm (2) aus flexiblem Material besteht und die Positionierungsmittel (4, 7, 8, 9, 10, 11, 12, 14, 15) Stabilisierungsmittel (7) umfassen, durch welche der flache Bildschirm (2) in einer freistehenden Betrachtungsposition eine vorgegebene Form einnimmt, ohne dass die Flexibilität des Bildschirms (2) wesentlich eingeschränkt ist.

3. Anzeigevorrichtung nach einem der vorhergehenden Ansprüche, **dadurch gekennzeichnet, dass** die Stabilisierungsmittel auf Druck gehaltene Glieder (8) aufweisen, die erst bei Überschreiten einer gewöhnlich auftretenden Belastung eine vorgegebene Position verlassen, in welche die Glieder nach Wegfall der außergewöhnlichen Belastung wieder zurückkehren.

4. Anzeigevorrichtung nach einem der vorhergehenden Ansprüche, **dadurch gekennzeichnet, dass** die Positionierungsmittel (4, 7, 8, 9, 10, 11, 12, 14, 15) Umlenkorgane (14, 15) umfassen, durch welche der flexible Schirm (2) derart krümmbar ist, dass der Bildschirm durch lediglich eine Schiebebewegung aus einer ersten Ebene in eine zweite Ebene bringbar ist, die in einem Winkel zur ersten Ebene steht.

5. Anzeigevorrichtung nach einem der vorhergehenden Ansprüche, **dadurch gekennzeichnet, dass** der Winkel zwischen den Ebenen im Bereich von 90° liegt.

6. Anzeigevorrichtung nach einem der Ansprüche 4 oder 5, **dadurch gekennzeichnet, dass** die Umlenkorgane (14, 15) einen in Verschieberichtung ausgerichteten, gekrümmten Führungskanal (4) aufweisen, in dem der Bildschirm (2) verschiebbar angeordnet ist.

7. Vorrichtung nach einem der vorhergehenden Ansprüche, **dadurch gekennzeichnet, dass** die Umlenkorgane wenigstens eine in Verschieberichtung ausgerichtete Führungsschiene aufweisen, in welcher ein Rand des Bildschirms (2) verschiebbar aufgenommen ist.

8. Vorrichtung nach einem der vorhergehenden Ansprüche, **dadurch gekennzeichnet, dass** der Bildschirm über einen Drehantrieb (12) verschiebbar ist, der auf eine flächige Seite des Bildschirms (2) wirkt.

9. Anzeigevorrichtung nach einem der vorhergehenden Ansprüche, **dadurch gekennzeichnet, dass** der Bildschirm aus einem Schlitz (13) ausfahrbar angebracht ist.

10. Anzeigevorrichtung nach Anspruch 9, **dadurch gekennzeichnet, dass** der Schlitz (13) verschließbar ist.
